# EUROPEAN PATENT APPLICATION

(11) **EP 3 518 162 A1**
(43) Date of publication of application: **31.07.2019**
(21) Application number: 19164436.8
(22) Date of filing: 02.04.2012
(51) Int. Cl.: G06Q 20/00, G06Q 20/32, G06Q 20/34, G06Q 30/02

(54) **CARDS, DEVICES, SYSTEMS AND METHODS FOR ADVANCED PAYMENT FUNCTIONALITY SELECTION**

(30) Priority: 04.04.2011 US 201161471246 P; 03.08.2011 US 201161514871 P
(62) Divisional of application: 17173592.1
(71) Applicant: Dynamics Inc., Cheswick, PA 15024 (US)
(72) Inventor: MULLEN, Jeffrey D., Pittsburgh, PA Pennsylvania 15232 (US)
(74) Representative: Froud, Christopher Andrew

(57) **Abstract**

A system comprises payment device means and device means. The payment device means has a first button means associated with a first payment feature and a second button means associated with a second payment feature. The device means has display means, where a graphical user interface is provided on the display means that includes a plurality of application features. A first one of the plurality of application features is associated with the first button means and a second one of the plurality of application features is associated with the second button means. The first one of the plurality of application features initiates a secondary purchase when a primary purchase is made with the payment device means and the first button means is activated.

## Description

### Background of the Invention

This invention relates to magnetic cards and devices and associated payment systems.

### Summary of the Invention

Systems and methods are provided for allowing a user to select one or more additional services to be performed in addition to the payment of goods with a payment card or other device (e.g., a mobile telephonic device, a tablet computer device, or another electronic device). A card, or other device, may include one or more buttons. A user may associate an additional service, or additional services, to a button of a card at any time. At the time of purchase, information indicative of the button the user selected may be passed to a point-of-sale system with a user's payment information. Such data may be, for example, communicated through a merchant acquirer's network to a processing facility. The processing facility may, for example, authorize a payment transaction and forward the information indicative of the button a user selected and the identity of a user to a remote facility. Such a remote facility may, for example, forward at least some of such information, as well additional information, to a third party service provider such that the third party service provider enacts the additional feature, or features, desired by the user.

The remote facility, or another facility, may additionally perform one or more features. The remote facility, or another facility, may perform the one or more features based on instructions received from a third party service provider. For example, a user may utilize a device, such as a wireless telephonic device, to associate a third party service feature to a button of the card. For example, a user may select a particular feature for a particular third party video game provider for a particular button of a card, or other device, from a wireless telephonic device. The feature, may be, for example, a feature that provides a particular reward for a particular video game based on, at least in part, the amount of the purchase. Accordingly, a user may earn rewards for a video game, such as an online social video game, based on purchases a user makes with his/her payment card.

A user may then, at a point-of-sale, press the button and the card, or other device, may communicate payment information to the point-of-sale device that includes information indicative of the button that was pressed by the user. The point-of-sale system may forward this received information to a payment processor via, for example, a merchant acquirer. The payment processor may forward all, or a portion of, the received payment information to, for example, a remote facility. The remote facility may then discern from the received information that a particular user made a purchase of a particular amount at a particular merchant on a particular date and that the user pressed a particular button on the user's card, or other device. The remote facility may also keep track of the selections the user has made for the particular buttons on the user's payment card, or other device, that are associated with particular third party features. In doing so, the remote facility may recognize a user and associate a third party functionality with the purchase. The remote facility may then forward at least a portion of the received payment information, as well as additional information, to the third party service provider(s) the user associated with the selection utilized for the purchase. The third party service provider may then perform a function. For example, the remote facility may forward user identification information and the amount of the purchase to a third party service provider. For example, a game provider may utilize this received information to provide a reward (e.g., points) to a particular game for the user associated with the purchase.

Additional features may be provided by the remote facility. Such features may include, for example, a piggyback purchase transaction. For example, a third party service provider feature may utilize a piggyback purchase transaction such that a second transaction is initiated with a purchase as part of the third party service provider feature. For example, a particular reward may be provided by a third party service provider for a particular additional cost. The third party reward may be purchased when a payment card, or other device, is utilized to make a purchase. Thresholds may be provided by the third party service provider such that the reward may be purchased if the purchase is made at, for example, a particular merchant location, on a particular date, and/or a particular amount is spent on the purchase. For example, an airline may provide a user with a particular number of airline miles based on the amount of purchase and the airline may double those miles for an additional cost of $1. As per another example, an airline may provide a user with a particular amount of miles (e.g., 100) for $1 whenever a purchase is made with a payment card and, for example, an associated feature is selected for that purchase. The remote facility may receive instructions from the third party service provider (e.g., after received payment and user identification information is provided to the remote service provider) indicative of the request for the remote facility to perform a particular piggyback transaction for a particular purchase for a particular user. Alternatively, for example, the third party service provider may pre-define a particular feature to have a piggyback transaction such that the remote facility performs the piggyback transaction at the time the remote facility determines the feature was selected by a user and a purchase utilizing the feature was made. During a piggyback transaction, for example, a second purchase may be initiated at a particular cost or a cost associated with the amount of the primary purchase (or other characteristic(s)). The piggyback transaction may be initiated by, for example, the remote facility (e.g., the technology provider controlling the operation of the remote facility). More than one piggyback transaction may be initiated for a feature associated with a purchase.

Dynamic purchasing descriptors may be utilized such that a purchase is made with a particular descriptor that reaches a user's payment card bill. The dynamic purchase descriptor may include, for example, not only the name of the merchant (e.g., the operator of the remote facility such as Dynamics Inc.), but also additional information that a user can utilize to assist in identifying the purchase. For example, the additional information may include the third party service provider (e.g., GameCompanyA), the type of feature (e.g., PiggyBackPurchase), the date of the primary transaction (e.g., 1.1.11), and the merchant of the primary transaction (e.g., StoreA). Accordingly, a portion of the dynamic purchase descriptor may read DynamicsInc-PiggyBackPurchase-GameCompanyA-1.11.11StoreA. In doing so, a user may, for example, be able to properly identify the secondary transactions and link the secondary transactions to the primary transactions. A feature and purchase history may also be viewable on a graphical user interface utilized by a user to select a feature. Such a graphical user interface may be provided, for example, on a webpage or application on a wireless telephonic device, a tablet computer, a stationary computer, or any other device.

A user may select different features, for example, for different cards or different buttons of a card. For example, a user may have a debit card and a credit card and may associate different features to the different cards.

A piggyback transaction may carry with it a cost. For example, the operator of the remote facility may charge a particular percentage and/or transaction fee for each secondary purchase. For example, a percentage of approximately 2%-10% of the purchase price may be charged to the third party service provider utilizing the piggyback transaction.

Additional features may be provided by the remote facility. Such features may include, for example, a value credit transaction where a credit is added to a payment card (e.g., value is transferred to the user). Such a credit may, for example, be in the form of a payment on a payment card (e.g., a payment to a credit card). Multiple methods may be utilized to put value on a payment card. For example, a credit account to credit account payment may occur. As per another example, an Original Credit Transaction (OCT) may occur. A value credit transaction may be initiated by a remote facility at the instruction of a third party service provider or by the remote facility as a result of pre-set rules for a particular feature initiating a value credit transaction. Dynamic descriptors may also be provided for a value credit transaction. Accordingly, a user may receive a value credit from, for example, an operator of a remote facility and may look at his/her credit card bill and see the value added to the bill and be able to discern the primary transaction from which the secondary value credit was initiated from. The dynamic value credit descriptor may include, for example, not only the name of the merchant (e.g., the operator of the remote facility such as Dynamics Inc.), but also additional information that a user can utilize to assist in identifying the purchase. For example, the additional information may include the third party service provider (e.g., AirlineCompanyA), the type of feature (e.g., ValueCreditAdditional), the date of the primary transaction (e.g., 1.1.11), and the merchant of the primary transaction (e.g., StoreB). Accordingly, a portion of the dynamic purchase descriptor may read DynamicsInc-ValueCreditAddition-AirlineCompanyA-1.11.11StoreB.

A value credit transaction may carry with it a cost. For example, the operator of the remote facility may charge a particular percentage and/or transaction fee for each secondary purchase. For example, a percentage of approximately 1%-30% of the value credit transaction may be charged to the third party service provider utilizing the value credit transaction.

A third party service provider may utilize a value credit transaction in a number of ways. For example, a provider of coupons, vouchers, certificates, or another value transfer structure, may utilize a value credit transaction to provide such value transfers. For example, a coupon/voucher company may allow users to purchase coupons/vouchers for particular merchants. A remote facility may forward payment information and user identification information to the coupon/voucher company. The coupon/voucher company may, in turn, utilize this information to determine whether a coupon/voucher applies. If a coupon/voucher applies for that user at that merchant, for example, the coupon/voucher company may provide instructions to the remote facility to initiate a value credit transaction in a particular amount. In doing so, for example, a coupon/voucher may be redeemed utilizing a user's payment card, or other device (e.g., wireless payment telephone).

A remote facility may provide transaction and user identification information to a third party service provider at authorization as well as at settlement. The operator of the remote facility may provide value to the third party service provider for a user utilizing a service from that third party service provider for a transaction. For example, basis points on transaction volume may be provided to the third party service provider in addition to transactional data. This basis point payment to the service provider may be made at settlement. Third party service providers may, for example, initiate a third party function based on authorization, but may be required by the operator of the remote facility to remediate the functionality in the event the transaction does not settle. Such a remediation may be, for example, a reversal of the third party feature or a notification to the user from the third party service that the transaction did not settle. The operator of the remote facility may, for example, provide its own features for purchase transactions. Similarly, other entities (e.g., third party service providers) may perform any/all of the functionality of the remote facility. Additional remote facilities may be utilized to perform all, or portions of, the functionalities of the remote facility or third party service providers.

Third party features may be categorized. For example, a category may include reward earning applications and other applications. A two-button card may have one button associated with one of these categories and another button associated with the other one of these categories. A user may select, for example, a feature from the category associated with the button. In doing so, a user may more easily remember the third party service feature selected for a particular button by being able to more easily remember what feature was associated with the button's category. Any number of buttons and categories may be utilized for a card or other device.

A Graphical User Interface (GUI) may be utilized by a user to associate a third party service to a particular button of a card (e.g., or to a card) or other device. The GUI may be provided via a wireless telephone, tablet computer, stationary computer, portable laptop computer, or any other device. A GUI may be provided on the webpage of a bank issuing the user's payment card (e.g., on the user's profile/account page of the issuing bank). The GUI may include an option for a user to associate a feature with an online transaction. The GUI may include an option for a user to associate a feature with an in-store transaction that is manually entered by a cashier. The GUI may, for example, include an option for a user to associate a feature with any transaction not performed via a card communicating to a point-of-sale reader in a store. Such an option, for example, may include transactions associated with card-not-present transactions (e.g., phone and internet transactions) and manually entered transactions.

A person-to-person payment service may be, for example, a third party service provider. For example, a user may associate a person-to-person service to a card. The user may make a purchase after selecting that the purchase include functionality from the person-to-person payment service. The person-to-person payment service may then perform a piggyback transaction for an amount to utilize the service (e.g., a percentage of the overall transaction). The person-to-person service may then, if funds are available in the account, for example, perform a value credit transaction for the amount of money in the account or the amount of the purchase transaction, whichever is less, and transaction fee (e.g., and other fees).

Selection of a feature may be provided, for example, by a GUI provided on a computing device (e.g., a mobile telephonic device) as a software application for that device or via the internet or an intranet through a web browser. Such a selection may be provided with a non-powered card such that a single feature may be associated with a card for a period of time. Such a selection may be associated to an option (e.g., a button) on a powered card or other device (e.g., a mobile telephonic device) such that the user may associate different features with different options (e.g., different buttons). Accordingly, for example, a user may receive a powered card, or other device, in the mail and use his/her web browser to associate different additional features to different buttons. The user may then utilize the card in a store and press a button in order to select that feature. A card, or other device, may download information (e.g., via a wireless communication such as a light or electromagnetic communication) such that the card, or other device, displays information next to an option indicative of the feature (e.g., "Redeem CompanyA Voucher," "SocialNetworkA Like"). Alternatively, no download may be provided and no additional information may be provided such that a user's card, or other device, includes a generic descriptor (e.g., "credit" and "feature," or "feature 1" and "feature 2," or "debit" and "feature 1" and "feature 2").

A remote facility may also receive additional information than just a user identifier and information indicative of the option selected by a user (or that the user made a payment). Such additional information may be, for example, the type of merchant (e.g., a retail merchant or a gas merchant), the location of a merchant (e.g., the zip code of a merchant), the type of transaction (e.g., online or in-store purchase), the name of the merchant (e.g., "Amazon.com," or "Walmart"), the amount of the transaction (e.g., $10.25), and any other information. Such a remote facility may forward such information to a third party service provider in addition to information generated by the remote facility (e.g., a second user identifier such that different identifiers are used with the facility sending payment information and the third party service provider).

An ecosystem may be provided in which a development kit is available for third parties to develop applications for payment cards or other devices. A GUI may be provided where a user can select different third party applications to be associated with a user's payment. The third party applications may need to be approved by an administrator before being accessible by a GUI. Different categories of third party applications may be provided on the GUI (e.g., a coupon category, a check-in category, a games category, a financial management tools category). The development kit may provide the ability for a third party service provider to, for example, receive user identification numbers and other information (e.g., merchant name and location) and provide particular information back (e.g., within a period of time) to a remote facility.

Information indicative of a button press, or use of a card, that triggers a feature may be provided in a payment message utilized at authorization or at settlement. Furthermore, the service provider may return information in a period of time that permits actions to be performed pre-authorization or pre-settlement.

The payment actions may be determined, for example, via a user interaction with the card. Particularly, for example, a user may press a button on the card, from a group of buttons, that is associated with the third party feature. Such third party features may be unique from the features provided to the user via the third parties non-payment card or device services. Accordingly, a user may obtain the benefit of the whimsical and festive nature of a unique feature every time the user makes a payment. Information indicative of feature selection may be provided, for example, via an output device operable to be read by a card reader. For example, the feature may be provided by a dynamic magnetic stripe communications device, an RFID antenna, an exposed IC chip, or any other type of card reader. For online purchases, for example, a display may be provided on the card and a user selection may cause a particular number (e.g., a particular code) to be displayed on the card. Such a code may be entered into a text box on a website at checkout and may be representative of the user's desired feature. Accordingly, the feature may be communicated to a remote server such that the feature may be performed in the third party service on behalf of the user. The code may additionally provide the benefits of a security code and may be entered with a payment card number (e.g., a credit or debit card number) at online or in-store checkout.

A card may include a dynamic magnetic communications device. Such a dynamic magnetic communications device may take the form of a magnetic encoder or a magnetic emulator. A magnetic encoder may change the information located on a magnetic medium such that a magnetic stripe reader may read changed magnetic information from the magnetic medium. A magnetic emulator may generate electromagnetic fields that directly communicate data to a magnetic stripe reader. Such a magnetic emulator may communicate data serially to a read-head of the magnetic stripe reader.

All, or substantially all, of the front as well as the back of a card may be a display (e.g., bi-stable, non bi-stable, LCD, LED, or electrochromic display). Electrodes of a display may be coupled to one or more capacitive touch sensors such that a display may be provided as a touch-screen display. Any type of touch-screen display may be utilized. Such touch-screen displays may be operable of determining multiple points of touch. Accordingly, a barcode may be displayed across all, or substantially all, of a surface of a card. In doing so, computer vision equipment such as barcode readers may be less susceptible to errors in reading a displayed barcode.

A card may include a number of output devices to output dynamic information. For example, a card may include one or more RFIDs or IC chips to communicate to one or more RFID readers or IC chip readers, respectively. A card may include devices to receive information. For example, an RFID and IC chip may both receive information and communicate information to an RFID and IC chip reader, respectively. A device for receiving wireless information signals may be provided. A light sensing device or sound sensing device may be utilized to receive information wirelessly. A card may include a central processor that communicates data through one or more output devices simultaneously (e.g., an RFID, IC chip, and a dynamic magnetic stripe communications device). The central processor may receive information from one or more input devices simultaneously (e.g., an RFID, IC chip, dynamic magnetic stripe devices, light sensing device, and a sound sensing device). A processor may be coupled to surface contacts such that the processor may perform the processing capabilities of, for example, an EMV chip. The processor may be laminated over and not exposed such that such a processor is not exposed on the surface of the card.

A card may be provided with a button in which the activation of the button causes a code to be communicated through a dynamic magnetic stripe communications device (e.g., the subsequent time a read-head detector on the card detects a read-head). The code may be indicative of, for example, a feature (e.g., a payment feature). The code may be received by the card via manual input (e.g., onto buttons of the card) or via a wireless transmission (e.g., via light, electromagnetic communications, sound, or other wireless signals). A code may be communicated from a webpage (e.g., via light and/or sound) to a card. A card may include a display such that a received code may be visually displayed to a user. In doing so, the user may be provided with a way to select, and use, the code via both an in-store setting (e.g., via a magnetic stripe reader) or an online setting (e.g., by reading the code from a display and entering the code into a text box on a checkout page of an online purchase transaction). A remote server, such as a payment authorization server, may receive the code and may process a payment differently based on the code received. For example, a code may be a security code to authorize a purchase transaction. A code may provide a payment feature such that a purchase may be made with points, debit, credit, installment payments, or deferred payments via a single payment account number (e.g., a credit card number) to identify a user and a payment feature code to select the type of payment a user desires to utilize.

A dynamic magnetic stripe communications device may include a magnetic emulator that comprises an inductor (e.g., a coil). Current may be provided through this coil to create an electromagnetic field operable to communicate with the read-head of a magnetic stripe reader. The drive circuit may fluctuate the amount of current travelling through the coil such that a track of magnetic stripe data may be communicated to a read-head of a magnetic stripe reader. A switch (e.g., a transistor) may be provided to enable or disable the flow of current according to, for example, a frequency/double-frequency (F2F) encoding algorithm. In doing so, bits of data may be communicated.

Electronics may be embedded between two layers of a polymer (e.g., a PVC or non-PVC polymer). One or more liquid polymers may be provided between these two layers. The liquid polymer(s) may, for example, be hardened via a reaction between the polymers (or other material), temperature, or via light (e.g., an ultraviolet or blue spectrum light) such that the electronics become embedded between the two layers of the polymer and a card is formed.

### Brief Description of the Drawings

The principles and advantages of the present invention can be more clearly understood from the following detailed description considered in conjunction with the following drawings, in which the same reference numerals denote the same structural elements throughout, and in which:
FIG. 1 is an illustration of a card and architecture constructed in accordance with the principles of the present invention;
FIG. 2 is an illustration of a card constructed in accordance with the principles of the present invention;
FIG. 3 is an illustration of a card constructed in accordance with the principles of the present invention;
FIG. 4 is an illustration of a card constructed in accordance with the principles of the present invention;
FIG. 5 is an illustration of a device constructed in accordance with the principles of the present invention;
FIG. 6 is an illustration of a device constructed in accordance with the principles of the present invention;
FIG. 7 is an illustration of a network constructed in accordance with the principles of the present invention;
FIG. 8 is an illustration of a graphical user interface constructed in accordance with the principles of the present invention;
FIG. 9 is an illustration of a graphical user interface constructed in accordance with the principles of the present invention;
FIG. 10 is an illustration process flow charts constructed in accordance with the principles of the present invention;
FIG. 11 is an illustration of a graphical user interface constructed in accordance with the principles of the present invention;
FIG. 12 is an illustration of process flow charts constructed in accordance with the principles of the present invention; and
FIG. 13 is an illustration of a graphical user interface and a device constructed in accordance with the principles of the present invention.

### Detailed Description of the Invention

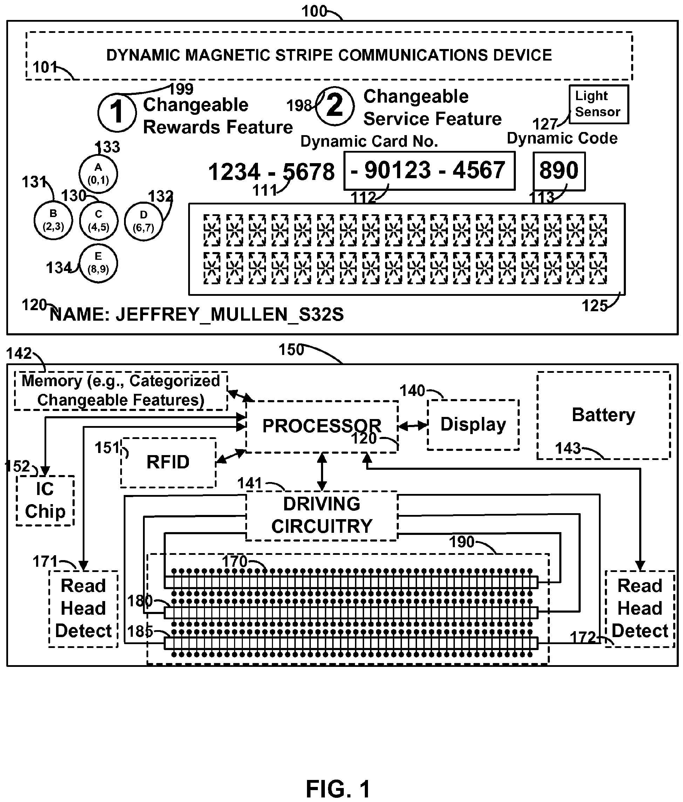

FIG. 1 shows card 100 that may include, for example, a dynamic number that may be entirely, or partially, displayed via display 112. A dynamic number may include a permanent portion such as, for example, permanent portion 111. Permanent portion 111 may be printed as well as embossed or laser etched on card 100. Multiple displays may be provided on a card. For example, display 113 may be utilized to display a dynamic code such as a dynamic security code. Display 125 may also be provided to display logos, barcodes, as well as multiple lines of information. A display may be a bi-stable display or non bi-stable display. Permanent information 120 may also be included and may include information such as information specific to a user (e.g., a user's name or username) or information specific to a card (e.g., a card issue date and/or a card expiration date). Card 100 may include one or more buttons such as buttons 130-134. Such buttons may be mechanical buttons, capacitive buttons, or a combination or mechanical and capacitive buttons. Card 100 may include button 199. Button 199 may be used, for example, to communicate information through dynamic magnetic stripe communications device 101 indicative of a user's desire to communicate a single track of magnetic stripe information. Persons skilled in the art will appreciate that pressing a button (e.g., button 199) may cause information to be communicated through device 101 when an associated read-head detector detects the presence of a read-head of a magnetic stripe reader. Button 198 may be utilized to communicate (e.g., after button 198 is pressed and after a read-head detects a read-head of a reader) information indicative of a user selection (e.g., to communicate two tracks of magnetic stripe data). Multiple buttons may be provided on a card and each button may be associated with a different user selections. Light sensor 127 may be provided, for example, to receive information from a display (e.g., a display of a mobile telephonic device or a laptop computer). Display 125 may allow a user to select (e.g., via buttons) options on the display that instruct the card to communicate (e.g., via a dynamic magnetic stripe communications device, RFID, or exposed IC chip) to use a debit account, credit account, pre-paid account, or point account for a payment transaction. Button 198 and button 199 may each be associated with, for example, a different third party service provider feature from a different category of third party service provider features and may be changed by a user at any time to different third party service provider features within the category associated with a particular button. The third party feature associated with a button may be changed by a user on a GUI provided by a device provider, remote facility provider, card issuer, processor, or any other entity. For example, a third party service provider may, on its website or application, allow a user to change the third party feature performed when the third parties feature button is selected by a user on the user's card or other device. For example, a category may be to earn rewards and another category may be other types of features. Accordingly, a user may select the type of reward (e.g., via button 199) the user desires to be associated with the rewards button and the user may earn such rewards when a transaction occurs utilizing that button. Types of rewards may be, for example, particular miles from particular airline companies or particular loyalty points from particular merchants. Other functionalities may be, for example, associated with a button having another category (e.g., button 198). For example, a coupon feature may be provided from a feature provider and a piggyback transaction feature may be provided by another service provider. Accordingly, a user may more easily remember the application the user selected for each button as each button may be associated with a different category for different types of features.

The selection of a feature may or may not have a cost associated with it. If a cost is associated with the feature, for example, the cost may be added to a customer's statement (e.g., added to a credit or debit purchase) for a particular transaction. A fixed-fee or variable-fee (e.g., a percentage of the transaction) may then be removed from the fee charged to the user and distributed among particular parties (e.g., distributed among the card issuer and/or device provider). The remainder of the fee may be provided, for example, to the third party service provider. A cost may be associated to a feature selection, but may not be a cost to a user. Instead, for example, the cost may be a cost to a third party service provider. The cost may be provided, for example, to other entities such as, for example, the device provider, card issuer, card processor (which may be the same, for example, as the card issuer), or any other entity (e.g., card network).

Architecture 150 may be utilized with any card. Architecture 150 may include processor 120. Processor 120 may have on-board memory for storing information (e.g., categorized changeable features). Any number of components may communicate to processor 120 and/or receive communications from processor 120. For example, one or more displays (e.g., display 140) may be coupled to processor 120. Persons skilled in the art will appreciate that components may be placed between particular components and processor 120. For example, a display driver circuit may be coupled between display 140 and processor 120. Memory 142 may be coupled to processor 120. Memory 142 may include data, for example, that is unique to a particular card. Memory 142 may include any type of data. For example, memory 142 may store discretionary data codes associated with buttons of architecture 150. Such codes may be recognized by remote servers to effect particular actions. For example, a code may be stored on memory 142 that causes a third party service feature for a particular category to be performed by a remote server (e.g., a remote server coupled to a third party service such as an online voucher or coupon provider). More particularly, memory 142 may include information indicative of different categories and such information may be communicated to a remote facility. The remote facility may, in turn, utilize the category utilized by the user at a purchase to determine the feature, for example, previously selected for that category by the user. Different third party features may be associated with different buttons. Or, for example, a user may scroll through a list of features and/or feature categories on a display on the front of the card (e.g., using buttons to scroll through the list). A user may select the type of payment on card 100 via manual input interfaces corresponding to displayed options on display 125. Selected information may be communicated to a magnetic stripe reader via a dynamic magnetic stripe communications device. Selected information may also be communicated to a device (e.g., a mobile telephonic device) having a capacitive sensor or other type of touch sensitive sensor.

A card may include, for example, any number of light sensors. Light sensors may be utilized such that a display screen, or other light emitting device, may communicate information to light sensors 127 via light.

Any number of reader communication devices may be included in architecture 150. For example, IC chip 152 may be included to communicate information to an IC chip reader. IC chip 152 may be, for example, an EMV chip. As per another example, RFID 151 may be included to communicate information to an RFID reader. A magnetic stripe communications device may also be included to communicate information to a magnetic stripe reader. Such a magnetic stripe communications device may provide electromagnetic signals to a magnetic stripe reader. Different electromagnetic signals may be communicated to a magnetic stripe reader to provide different tracks of data. For example, electromagnetic field generators 170, 180, and 185 may be included to communicate separate tracks of information to a magnetic stripe reader. Such electromagnetic field generators may include a coil wrapped around one or more materials (e.g., a soft-magnetic material and a non-magnetic material). Each electromagnetic field generator may communicate information serially to a receiver of a magnetic stripe reader for a particular magnetic stripe track. Read-head detectors 171 and 172 may be utilized to sense the presence of a magnetic stripe reader (e.g., a read-head housing of a magnetic stripe reader). This sensed information may be communicated to processor 120 to cause processor 120 to communicate information serially from electromagnetic generators 170, 180, and 185 to magnetic stripe track receivers in a read-head housing of a magnetic stripe reader. Accordingly, a magnetic stripe communications device may change the information communicated to a magnetic stripe reader at any time. Processor 120 may, for example, communicate user-specific and card-specific information through RFID 151, IC chip 152, and electromagnetic generators 170, 180, and 185 to card readers coupled to remote information processing servers (e.g., purchase authorization servers). Driving circuitry 141 may be utilized by processor 120, for example, to control electromagnetic generators 170, 180, and 185.

Architecture 150 may also include, for example, a light sensor. Architecture 150 may receive information from a light sensor. Processor 120 may determine information received by a light sensor.

Persons skilled in the art will appreciate that a user may associate any payment card with a remote facility (e.g., by entering the user's payment card details). A user may then be provided with value credits (e.g., via an original credit transaction method) when, for example, the card is utilized to complete a purchase transaction. Features may be associated to a card via a GUI (e.g., via a web browser or an application of a device such as a wireless telephonic device or tablet computer).

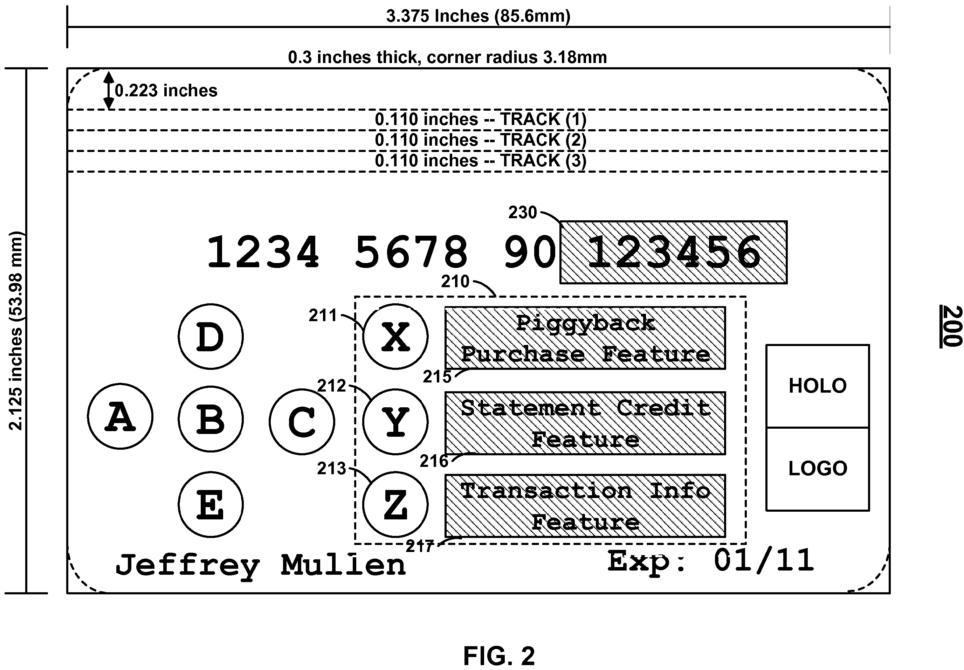

FIG. 2 shows card 200 that may include, for example, display 230 and interface 210. Interface 210 may include, for example, displays 215, 216, and 217 as well as buttons 211, 212, and 213. Display 215 may be associated with button 211. Display 216 may be associated with button 212. Display 217 may be associated with button 213. Display 230 may be utilized to display, for example, all or a portion of one or more payment card numbers such as a credit card number, debit card number, gift card number, pre-paid card number, loyalty card number, and/or any other card number. A card may be issued with a pre-determined set of actions associated with buttons 211-213. Such actions may correspond to actions that control a portion of a service from one or more third party service providers. A user may, at the time of applying for a payment card (or a payment service on another device such as a mobile telephonic device), select a particular card and/or buttons for a particular one or more third party services and also select the particular feature or features from the selected third party service or services for the card and/or buttons. Information associated with the third party service and feature for a button may be displayed on a display in the proximity of that button. Information associated with a feature for a button may also be permanently provided on the card in the proximity of a button. Such permanent indicia may take the form of printed indicia, embossed indicia, and/or engraved indicia. A user may change the actions for particular buttons online (e.g., via a website associated with a card issuer or a game provider). Such a change may be implemented, for example, on backend systems. Accordingly, for example, a remote server may change the way it uses different messages received from the card. In doing so, a user may change features and third party services without having to change the operation of a card. Such a change may be implemented, for example, on the card. For example, a card may receive information wirelessly (e.g., via light and/or sound) indicative of a desire to change the feature for a particular button. Accordingly, the card may reconfigure the uses of each button, display different information, and communicate different information when a particular button is selected. Such re-configuration instructions may be communicated manually to a card (e.g., via a code manually entered into buttons on the card). For example, each button of card 200 may be associated with a feature from a different third party service provider. A user may change feature preferences and, as a result, may want to add, remove, or modify a third party service provider feature. In reconfiguring the card or the backend, the user may, for example, add a feature for a third party service that was released after card 200 was issued to the user.

Third party service features may take many forms. Users may be provided with a visual display of the name of the feature or the type of the feature. For example, display 215 may include the type of the feature associated with button 211 (e.g., a piggyback purchase transaction). Display 216 may include the type of the feature associated with button 212 (e.g., a statement credit feature such as a value credit transaction performed via an original credit transaction method). Display 217 may include the type of feature associated with button 213 such as, for example, a transactional information feature. A transactional information feature may provide purchase transactional information (e.g., authorization and/or settlement data) to a third party service provider such that this data may be utilized to provide a feature to a user. Such a feature may include, for example, a feature that posts the information of a purchase on a profile page of the user on a particular website (e.g., a third party service provider website such as a social network website). A check-in feature may, for example, be provided where a user is noted as being at a particular merchant on the user's profile as a result of the purchase.

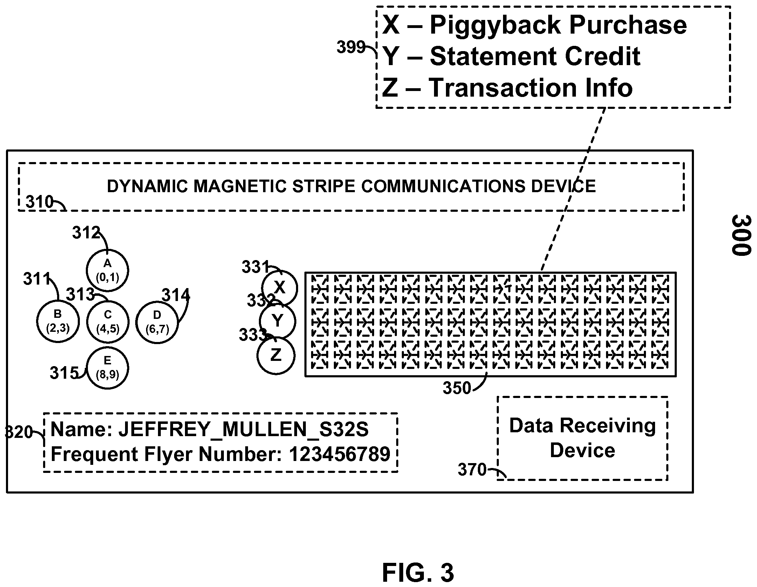

FIG. 3 shows card 300. Card 300 may include buttons 311-315, display 350, data receiving device 370, permanent information 320, and dynamic magnetic stripe communications device 310. Display 350 may include a graphical user interface such as interface 399. In graphical user interface 399, three options are provided. A user may select an option be selecting a button that corresponds to that option. Each option may be the ability for a user to use a different third party service provider feature for a purchase. For example, graphical user interface 399 may include an option associated with a feature having a piggyback transaction, a feature having a statement credit, and a feature based off transactional information.

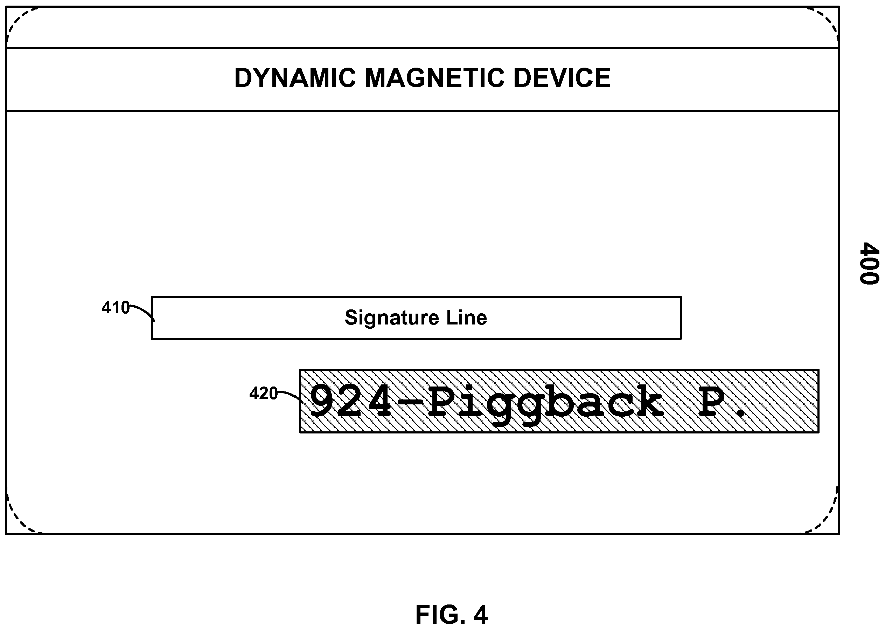

FIG. 4 shows card 400 that may include signature line 410 and display 420. A code may be provided on display 420 indicative of a particular third party service provider feature such as a feature having a piggyback transaction component to the feature. The code may be entered as a security code for an online transaction. For example, a user may press a button associated with getting a third party service feature with his/her purchase. Such a button may be provided on the obverse side of a card. Similarly, a button may be provided on the reverse side of a card (e.g., the side of the card shown in card 400). The reverse side of the card may then display a security code that is indicative of the desire for a user to utilize a third party service feature with a purchase as well as be used to help authenticate the transaction. Accordingly, a user may obtain the benefits of third party service features while making online purchases via the use of dynamic security codes representative of security information and third party service features.

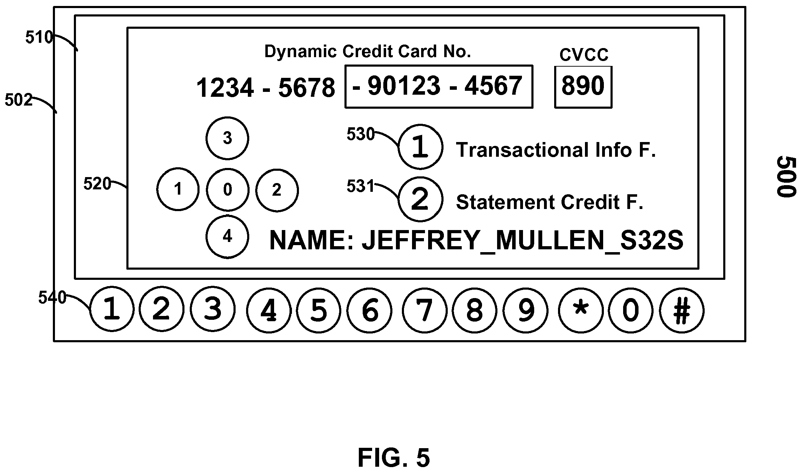

FIG. 5 shows device 500 that may include housing 502, display 510, virtual card 510, physical buttons 540, and virtual buttons 530 and 531. Device 500 may be, for example, a mobile telephonic device or other device (e.g., portable computer such as a portable tablet computer). Display 510 may be a touch-sensitive display. Person skilled in the art will appreciate that any physical card provided herein may be provided as a virtual card on a mobile telephonic device. Physical buttons may, for example, correspond to virtual buttons. Device 500 may communicate information to a card reader, for example, via a contactless (e.g., an RFID signal) or contact-based signal (e.g., a USB connection). For example, virtual button 530 may correspond to one feature form one third party service provider (e.g., a transactional information feature) while virtual button 531 may correspond to another feature from another third party service provider (e.g., a statement credit feature). Persons skilled in the art will appreciate that the device provider may, for example, provide features. Additionally, for example, all features for a card may be utilized with a particular payment account (e.g., a credit account) such that a payment transaction with that payment account is performed if any feature is selected. As per another example, one or more features may be associated with a payment account (e.g., a credit account) while an additional one or more features may be associated with a different payment account (e.g., a debit account). Accordingly, a feature selected associated with a credit account may be utilized to purchase with credit and may perform an additional action associated with that feature and a different feature selected associated with a debit account may be utilized to purchase with debit and may perform an additional action associated with that different feature.

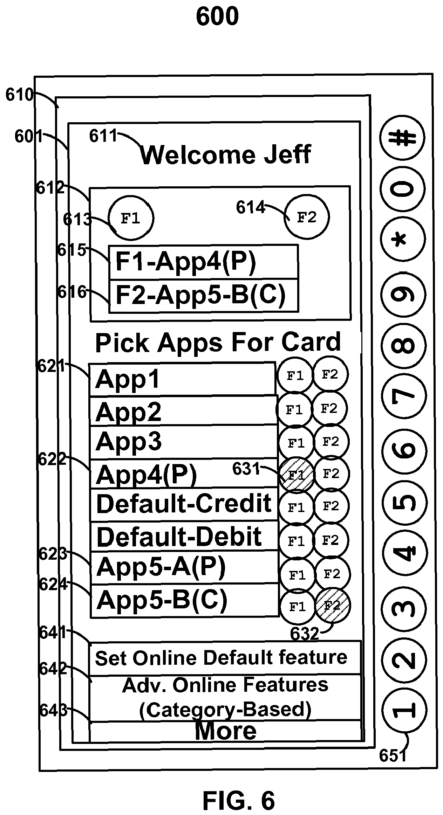

FIG. 6 shows device 600. Device 600 may include one or more physical buttons 651, display screen 610 (e.g., a touch display screen such as a capacitive-touch or resistive-touch display screen), GUI 601, text 611, virtual card 612, virtual indicia 613 and 614, field descriptors 615 and 616, applications 621-624, selection options 631, 632, and 641-643.

A user may associate a card, such as a powered or non-powered card, with an application manager for managing third party service features. Such an application manager may be provided, for example, on a remote facility and displayed on a graphical user interface to allow a user to change the third party service features associated with a card. In this manner, a user may utilize a GUI to be provided with an ecosystem of applications and may, for example, select, at any time, a particular feature to associate with a card or a card button. Persons skilled in the art will appreciate that a default feature may be provided or that a number of features provided by a card issuer or entity may be provided in addition to third party service features. For example, a card issuer may provide a card with a default on one button for credit and a default for a second button as decoupled debit. A user may press the first button to perform a credit transaction. A user may press the other button to perform a decoupled debit transaction.

Virtual card 612 may be provided as a representation of a user's physical card associated with an application manager. A user may be provided with the ability to change between multiple physical cards and configure the features associated with those multiple physical cards. Accordingly, virtual card 612 may be provided with indicia 613 in the configuration of, and indicative of, one physical button associated with a user's physical card and virtual card 612 may be provided with indicia 614 in the configuration of, and indicative of, another physical button associated with a user's physical card. Fields 615 and 616 may include the features associated with each button. Accordingly, a user may, for example, view virtual card 612 in order to refresh the user's memory on the features associated with the physical buttons on a user's physical card (not shown). GUI 601 may be, for example, provided as an application for a device (e.g., a portable computing device or a mobile telephonic device) or retrieved information from a web browser. Text 611 may, for example, identify the user associated with virtual card 612 and the corresponding physical card (not shown).

A list of applications may be provided on a card. Such applications may provide features for a third party service provider. A user may, for example, select that different applications be associated with a particular card or a particular button on a card. For example, selection 631 may associate application 622 to the physical button of a card associated with virtual button 613. Selection 632 may associate application 624 to the physical button of a card associated with virtual button 614. In doing so, a user may change the features of a card by using GUI 601. A physical card (not shown) may communicate information indicative of the button that was pressed with other payment data (e.g., an account number, security code, and other data). For example, information indicative of the button that was pressed may be included in discretionary data of a payment message. A payment message may be, for example, one or more tracks of magnetic stripe data (e.g., communicated from a dynamic magnetic stripe communications device), an RFID message (e.g., an NFC message from an radio frequency antenna), or an exposed IC chip message (e.g., an EMV message) from an exposed IC chip. Such information may be passed to a card issuer or processor from a point-of-sale and any intermediary devices (e.g., a merchant acquirer processing server) and the information may be passed to a remote facility (e.g., a facility providing an application manager) such that the remote facility may determine the button that was pressed by a user. This remote facility may, in turn, retrieve information associated with the third party feature (or a feature of a card issuer, processor, application manager provider, or any entity) and forward information to that feature provider such that the feature may be performed. Additional Information may be returned to the entity that provided the information indicative of the button the user pressed. Persons skilled in the art will appreciate that if, for example, a non-powered card is utilized then information indicative that a purchase was made may be provided to an application manager provider such that the application manager provider can initiate the desired feature for the non-powered card. For non-powered cards, for example, features may be associated with different types of purchases such as, for example, one feature may be provided for a particular merchant type (e.g., a game feature for gas purchases) and another feature may be provided for a different merchant type (e.g., a reward feature for transportation purchases). Features may be associated with other characteristics of a purchase such as, for example, a purchase above a particular amount (e.g., at or above $100) or a purchase below a particular amount (e.g., below $100). Such additional feature selections may be provided, for example, for powered cards and devices.

The type of the feature may be provided next to the feature. For example, application 622 may include information to associate the application to a particular type of feature (e.g., a piggyback transaction). Application 623 may include information to associate the application to a particular type of feature (e.g., a piggyback transaction). Application 624 may include information to associate an application to a particular type of feature (e.g., a statement credit). Persons skilled in the art will appreciate that a feature may include both, for example, a piggyback transaction component and a statement credit component. An administrator of a remote facility or the application provider may determine the category of a particular application. Options may be provided to a user that do not have features such that, for example, a credit transaction or a debit transaction may occur without any additional third party service provider features.

GUI 601 may be provided, for example, on a card issuer's website such as, for example, on a bill statement web page. GUI 601 may be provided, for example, above the bill statement or to the right of the bill statement. Accordingly, for example, a user may utilize the application manager to manage application features when the user is logged into his/her account. Similarly, a third party service provider may utilize GUI 601 as part of a user's administration or experience of that third party service. Accordingly, for example, a user's profile page for a third party service may include GUI 601. In this manner, application manager provider may provide web-code that retrieves GUI 601 from a remote facility managed by the application manager provider. Selection 641 may be utilized by a user to set a feature as a default feature to be utilized, for example, in card-not-present transactions (e.g., phone and online transactions) and transactions that are manually keyed in at the point-of-sale by a cashier. Selection 642 may be utilized to search for features based on categories. Particularly, a user may be provided with a list of categories. A user may select a category and be provided with, for example, sub-categories or applications in the category. Applications may be provided, for example, in alphabetical order, date list ordered, or any other type of order. Selection 643 may be utilized for additional selection options.

A card may be provided with one button for a particular payment account (e.g., credit) and one button for a changeable feature. Accordingly, a user may, for example, only need to remember one feature associated with a card. A credit account may include rewards such as points, cashback, or miles, from the card issuer. Accordingly, pushing the payment account button may earn the user such rewards. Pushing the changeable feature button may, alternatively, for example, not earn the user such rewards and may instead initiate a changeable feature. In doing so, for example, the cost of providing a card may be reduced in that the cost of rewards for the card may be reduced. Rewards may not, for example, be associated to a credit account.

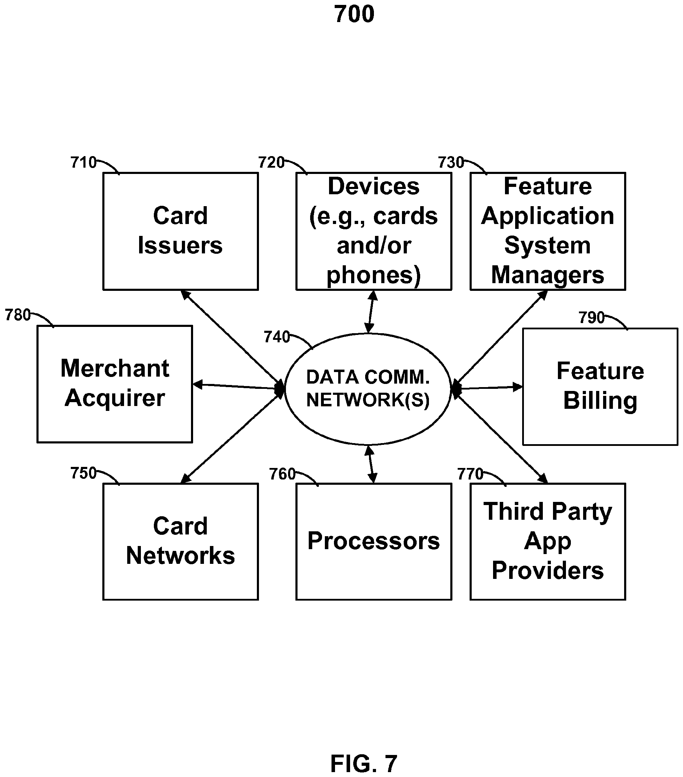

FIG. 7 shows network 700 that may include, for example, card issuer(s) 710, device(s) 720, feature application system manager(s) 730, data communications network(s) 740, card network(s) 750, processor(s) 760, third party application provider(s) 770, merchant acquirer(s) 780, and feature billing servers and/or facilities 790. Other entities may include resources in network 700. For example, device provider(s) may provide resources in network 700. Feature application system manager(s) 730 may manage different identification numbers for a user and/or card for different entities and may exchange both information and value between the entities.

A remote facility may, for example, receive all, or a portion of, payment transactional information for a purchase from a processor and/or issuing bank. The received information may include, for example, a payment card number. The remote facility may, for example, provide a generic identification for a user and may provide this generic identification to third party service providers. Alternatively, for example, a user identification may be provided by a processor and/or issuing bank so that a payment card number is not provided to the remote facility. The remote facility may similarly be provided with different user identifications from different third party service providers. The remote facility may, for example, manage these service provider and processor/bank identities such that a particular identity one entity uses is not provided to a different entity. In this way, the remote facility may provide information brokering.

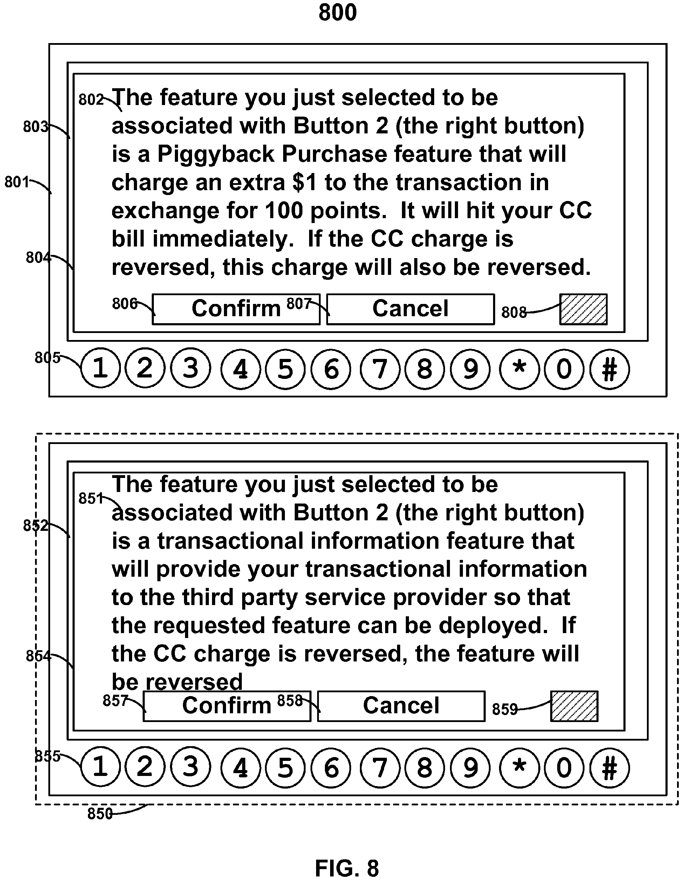

FIG. 8 shows graphical user interface 803. Graphical user interface 803 may be, for example, an internet browser display on a website or an application display on a device (e.g., device 801 having buttons 805). A user may, using graphical user interface 800, select a feature for a payment card, or other device, (e.g., select a feature for a particular button of a payment device such as a payment card). Graphical user interface 802 may provide detailed information about the operation of the selected feature. For example, a user may utilize a graphical user interface (not shown) to select a feature and then graphical user interface 803 may be provided to provide additional information about the selected feature to the user. Virtual buttons 806 and 807 may be utilized to confirm and/or cancel associating the selected feature, for example, to a particular button of a payment device. Light area 808 may be utilized to provide light pulses, indicative of information, to a payment device, such as a payment card. For example, the payment device, such as a payment card, may include a light sensor to receive the light pulses and discern the encoded information. The encoded information may be information associated with the feature, such as the name of the feature. In doing so, for example, the name of the selected feature may be displayed on a display of a card when a button associated with the selected feature is pressed by a user. Information 802 may be provided and may be utilized to notify a user that a feature that was selected for a particular button of a particular electronic card, or other electronic device, is a piggyback purchase feature that charges an extra amount of money (e.g., $1) to a transaction in exchange for a reward (e.g., 100 points). The user may be notified that the charge may hit the bill of the payment card immediately. If the payment card transaction is reversed, the additional charge may also be reversed. If a payment card transaction is reversed, alternatively, for example, the additional charge may not be reversed and the user may still receive the reward, which may be a reward given in addition to a base reward provided without the piggyback purchase.. Configuration 850 may be provided that may include, for example, a housing with physical buttons 855, display screen 852, and graphical user interface 854 with information 851. Confirmation button 857 and cancel button 858 may be provided along with light area 859. Information 851 may be provided, for example, to notify a user that a feature that was recently selected to be with a button is a particular type of feature. The particular type of feature, for example, may be a feature where transactional information is provided to the third party service provided so that the requested feature can be deployed. The user may also be notified, for example, that if the transaction is reversed (e.g., a credit card transaction is returned), the feature will similarly be reversed. Confirmation button 857 may be utilized, for example, to keep track that a particular user agreed to the terms and conditions of using the feature. Button 858 may be utilized to not allow association of the feature until the terms are agreed to by a user. A user may be prompted with an additional graphical user interface to acknowledge that the feature has been associated or has not been associated with a particular button on a particular payment card or other payment device. Light area 859 may be utilized, for example, to communicate information associated with information 851 to a card, or other device. For example, a user that confirms the terms and conditions may then be provided with the ability to download information to the user's card or other device (e.g., the user's mobile telephonic device) via light area 859.

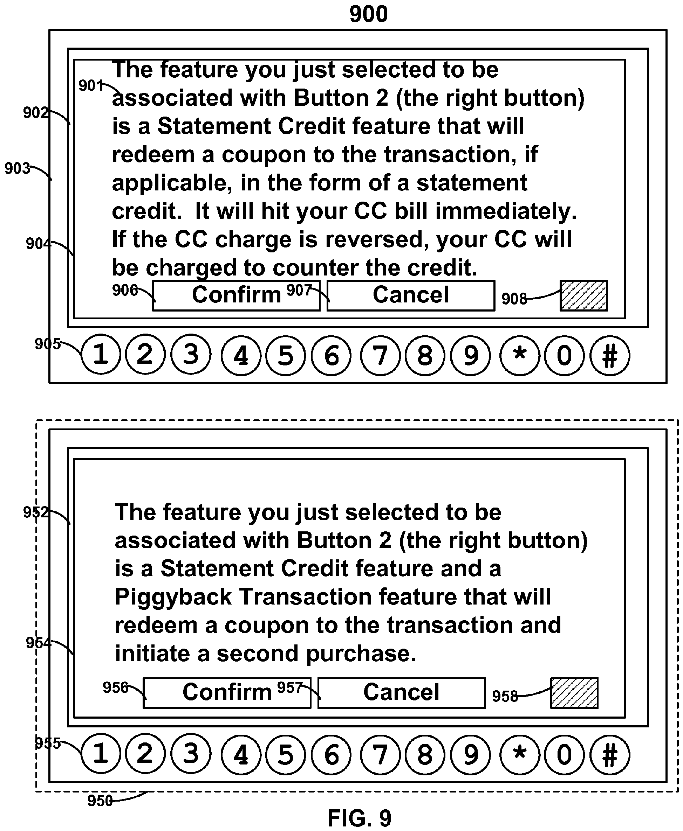

FIG. 9 may include graphical user interface 901. Graphical user interface 904 may be provided on display 902 of device 903 having buttons 905. Confirmation button 906 and cancel button 907 may be included as well as light box 908. Information 901 may, for example, be included that notifies a user that the feature selected to be associated with a card or other device (or a particular button of a card or other device) is a statement credit feature that will, for example, redeem a value element (e.g., a coupon) to the transaction and provide value to the payment account as a statement credit. The user may be notified, for example, that the statement credit may be provided immediately, but that if the underlying transaction is reversed, the payment account may be charged to counter the credit. In doing so, for example, a user may be provided with a statement credit at the point of purchase and protection may be provided to the provider of the statement credit if the underlying purchase is reversed (e.g., returned). A user may agree to such terms and conditions by pressing button 906 or not agree to the terms and conditions by pressing button 907. Information may be provided to a payment card, or other device, via light pulses indicative of information from light box 908. Such information may be provided after a user agrees to the terms and conditions by pressing button 906. Persons skilled in the art will appreciate that other forms of payment may be made if the underlying transaction for a statement credit is reversed. For example, the user's bank account may be debited this amount (e.g., via an ACH transfer from the user to the service or ecosystem provider). A statement credit may, for example, be posted to an account after a period of time (e.g., after 45 days) such as to decrease the risk of returns (e.g., reversals). A statement credit may, for example, be posted to an account after a transaction settles. A user may be provided with a virtual currency instead of a statement credit. This virtual currency may be viewed from a graphical user interface. The amount of virtual currency a user may withdrawal, however, (e.g., via a statement credit or transfer to a bank account or a physical or electronic check or an account-to-account transfer) after certain conditions are met. Such conditions may include for example, that a transaction settles and/or that a period of time elapses without the transaction reversing.

Graphical user interface 954 may be provided on display 952 of device 950 having buttons 955. Confirmation button 956 and cancel button 957 may be included as well as light box 958. Interface 954 may, for example, provide information that notifies a user that a feature was selected to be associated to a particular button of a particular payment card is a statement credit feature and a piggyback feature. For example, a value may be redeemed (e.g., a coupon or pre-paid coupon) while a second purchase is initiated. Light box 958 may communicate, via light pulses, information to devices associated with interface 954.

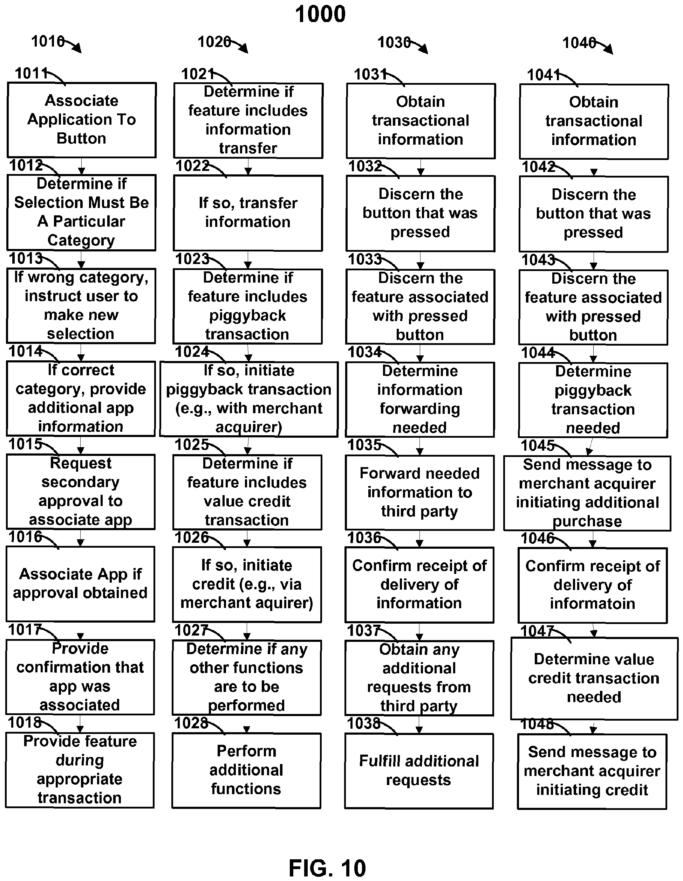

FIG. 10 shows process 1010 having steps 1011-1018, process 1020 having steps 1021-1028, process 1030 having steps 1031-1038, and process 1040 having steps 1041-1048.

Process 1010 may be included that includes step 1011. Step 1011 may associate an application to a button. Step 1012 may determine if the selection must be a particular category. Persons skilled in the art will appreciate that any step of any process may be included or removed from a process. Step 1013 may be initiated that if a feature is selected that does not correlate to a pre-determined category of features for a button, the user is instructed to make a new selection. Step 1014 is provided such that if the correct category is associated with the button and the feature, additional information about the application feature is provided (e.g., displayed to a user on a display of a device). Step 1015 may be included where secondary approval is requested of the user to associate the application to the desired button. Step 1016 may be provided to associate the application if approval is obtained. Step 1017 may be provided to provide confirmation to the user that the application feature was associated. For example, confirmation may be provided on a display of a device. Confirmation may be provided in a text message or an email message.
Step 1018 may be included to provide the feature when a transaction occurs and the button associated with the feature is selected. Persons skilled in the art will appreciate that different virtual cards on a phone may be associated with different features and that the features associated with those cards may be changed such that a virtual card selected on a mobile device may communicate information to complete a purchase and the selected feature may be utilized with the purchase. Physical cards may have different features and such features may be changed (e.g., via an electronic device).

Process 1020 may be included and may include step 1021 which may determine if a feature includes information transfer to a service provider. Step 1022 may be included such that if a feature does include transfer of payment information to a third party, the information is transferred. Step 1023 may be included to determine if a feature includes a piggyback transaction. Step 1024 may be included to initiate, if a piggyback feature is associated, the piggyback transaction. A piggyback transaction may be initiated, for example, by the ecosystem provider (which may be the device provider) by the ecosystem provider acting as a merchant and initiating a purchase as a merchant in the amount of the piggyback transaction. Accordingly, a merchant acquirer may be utilized to initiate a piggyback transaction. Step 1025 may be utilized to determine if the feature includes a value credit transaction. If so, the value (e.g., credit statement) may be initiated (e.g., via a merchant acquirer. Such a value may take the form of, for example, an Original Credit Transaction (OCT), or other transaction that provides value to a user, initiated at the merchant acquirer. Such a piggyback transaction and a value credit transaction may be associated with a fixed and/or variable fee. The ecosystem provider may, in turn, provide a fixed and/or variable fee for a piggyback and value credit feature that is larger than the fixed and/or variable fee associated with executing those transactions. Step 1027 may be provided to determine if any other functions are to be performed. The additional functions may be performed, for example, in step 1028. Additional functions may be, for example, provided notifying a user that a feature was utilized and performing the feature application itself. Persons skilled in the art will appreciate that the provider of the system of process 1020 may, for example, provide feature applications. The system of process 1020 may also, for example, handle identity exchanges such that the system provides the identity of a user to the third party in the form of the user's third party identity. This third party identity may be different, for example, than the identification information utilized for a card issuer to identify a user (e.g., via the user's name, payment account number, expiration date, security code, phone number, address, and/or social security number).

Process 1030 may be included and may include, for example, step 1031 in which transactional information may be obtained. The button that was pressed may be discerned in step 1032. The feature associated with the pressed button may be discerned in step 1033. The information forwarded for the feature may be determined in step 1034 and the forwarding may occur in step 1035. Receipt of delivery of information may be provided in step 1036. Additional requests from third parties may be obtained in step 1037 and additional requests may be fulfilled in step 1038.

Process 1040 may be included in which transactional information is obtained in step 1041.
The button that was pressed may be discerned in step 1042. The feature associated with the button press may be discerned in step 1043. The determination that piggyback transaction is associated with the feature may be determined in step 1044 and messaging may be made to a merchant acquirer (or other entity such as another processing entity) to initiate the additional purchase. Alternatively, for example, the purchase may be initiated by the system of process 1040 if the system of process 1040 includes the ability to initiate a purchase. Receipt of delivery of information may be included in step 1046. Value credit determination may be made in step 1047 and a message may be sent to a merchant acquiring initiating value credit transaction in step 1046. Person skilled in the art will appreciate that an application may include for a single purchase (or multiple purchases) forwarding transaction information to more than one third party service providers, providing multiple piggyback purchases, and provide multiple value credit transactions.

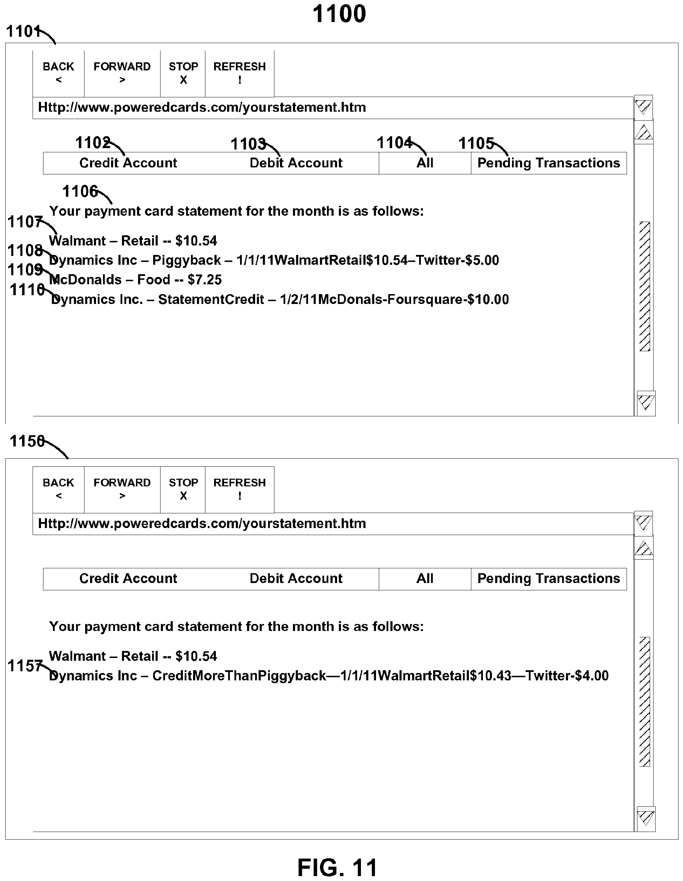

FIG. 11 shows GUI 1101 that may include a bill statement for one or more accounts. Selection 1102 may be utilized to see a bill statement for a credit account. Selection 1103 may be utilized to see a bill statement for a debit account. Selection 1104 may be utilized to see a consolidated bill statement for multiple accounts. Selection 1105 may be utilized to see a bill statement for pending transactions. Information 1106 may be provided to indicate the parameters of the bill statement (e.g., time period). Statement entry 1107 may be provided as a purchase transaction at a store. Statement entry 1108 may be provided by a remote facility that initiated a piggyback transaction utilizing a merchant acquirer and determining a particular descriptor to utilize when making the purchase so that additional information is provided to a consumer. Entry 1108 may include, for example, the company acting as the merchant (e.g., the ecosystem provider), the type of transaction (e.g., a piggyback transaction, the underling purchase in the form of the date and name and amount of the underlying purchase, the feature selected, and the amount of the type of transaction (e.g., $5). Statement entry 1109 may be a purchase transaction. Statement entry 1110 may be provided by a remote facility that initiated a credit transaction utilizing a merchant acquirer and determining a particular descriptor to utilize when making the purchase so that additional information is provided to a consumer. Entry 1110 may include, for example, the company acting as the merchant (e.g., the ecosystem provider), the type of transaction (e.g., a statement credit transaction), the underling purchase in the form of the date and name and amount of the underlying purchase, the feature selected, and the amount of the type of transaction (e.g., $10).

Persons skilled in the art will appreciate that a user may utilize a third party feature with a purchase that includes both a piggyback transaction and a statement credit component. Accordingly, a remote facility may perform the calculation as to the larger component, determine the type of transaction needed to implement the difference between the two components on the larger component. Accordingly, the remote facility may perform a piggyback transaction or a statement credit in the amount of the difference of the individual transactions. Fees billed to third party services providers for the components may not be charged for the overall transaction. The remote facility may dynamically change the merchant name to include dynamic information indicative not only of the merchant name (e.g., the name of the operator of the remote facility/server(s)) but also indicative that the two transactions were combined and the difference was applied as either a credit or a piggyback transaction. Persons skilled in the art will appreciate that a keep the change functionality may be provided by a feature. A secondary transaction may be initiated to round the transaction up to a particular monetary unit (e.g., round up to the nearest dollar, two dollars, even dollars, five dollars, ten dollars, or twenty dollars). The additional amount may be charged by the feature as a secondary transaction and rewards may be provided by the feature provider associated with the amount utilized to round up the transaction. In doing so, for example, a user may slowly accelerate the earning of particular rewards (e.g., airline miles) while simplifying their personal accounting by accounting with particular monetary units. Window 1150 may be provided and may include information 1157 that may include an indication that both a credit and piggyback feature were applicable and that the credit was more than the piggyback.

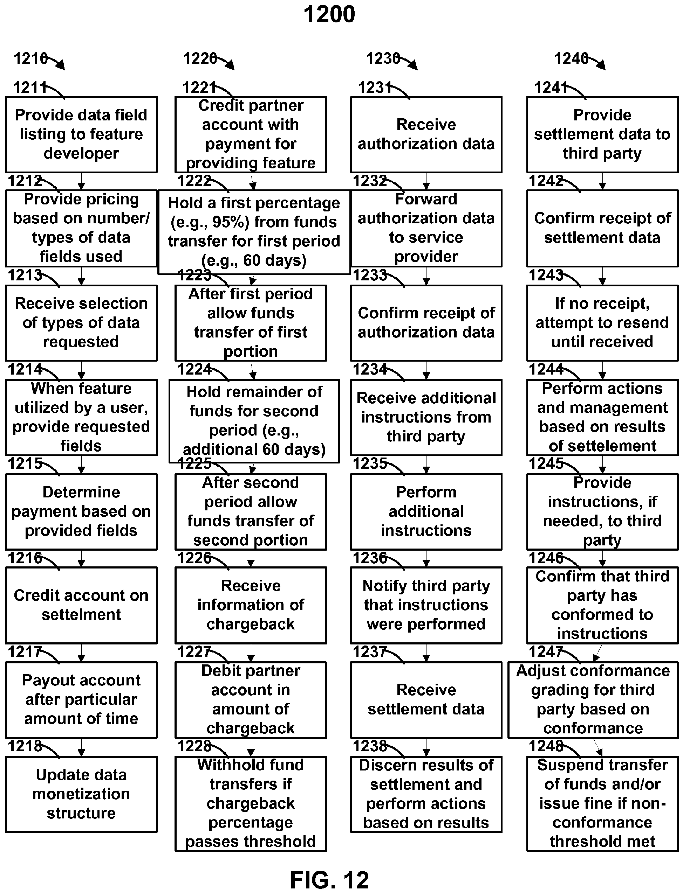

FIG. 12 shows process 1210 having steps 1211-1218, process 1220 having steps 1221-1228, process 1230 having steps 1231-1238, and process 1240 having steps 1241-1248. Process 1210 may be included and may include step 1211, in which a data field listing may be provided to a feature developer. Step 1212 may be provided in which pricing may be based on the number and/or types of data fields a developer utilizes. Accordingly, a developer may be provided with one pricing structure if no purchase data is utilized, a second pricing structure larger than the first pricing structure if a small amount of purchase data is utilized, and a third pricing structure if an amount of data more than the second amount of purchase data is utilized. The third pricing structure may be more than the second pricing structure. Step 1213 may be included in which the selection of the types of data requested are received. Step 1214 may be utilized such that when a feature is utilized by a user, the requested fields are provided (e.g., to the third party service provider). The payment and/or invoice to the third party service provider may be based on the provided fields as in step 1215. For example, a feature may be provided different levels of compensation for providing a feature based on the amount of data utilized (e.g., based on the fee structure utilized). Step 1216 may be utilized to pay a developer when settlement occurs or after a particular time after settlement occurs. Step 1217 may be provided to payout the account to a third party developer after a particular amount of time. Step 1218 may be provided to update the data monetization structure as desired, for example, by the provider of the ecosystem or another entity. Process 1220 may be included and may include step 1221, in which a third party developer account is credited for providing a feature. A first percentage (e.g., approximately 95%) of the funds due to a developer may be held for a first period of time (e.g., approximately 60 days). After the first period, funds may be transferred of that first portion in step 1223. The remainder of the funds may be held, for example, for a second period of time (e.g., an additional 60 days) in step 1224. After a second period, the funds may be allowed to transfer in step 1225. Information of a chargeback, or other reversal, may be provided in step 1226. The partner account may be debited in the amount of the reversal (e.g., charge-back) in step 1227. The fund transfers may be held if a chargeback percentage for a developer passes a particular threshold in step 1228. The hold on the fund transfers may be removed if the chargebacks are below the chargeback threshold for a period of time. Process 1230 may be included. Step 1231 may be included in process 1230 in which authorization data is received. Authorization data may be forwarded to a third party provider in step 1232. Receipt of authorization data from the provider may be confirmed in step 1233. Additional instructions may be received from the third party in step 1234. Additional instructions may be performed in step 1235. Third party may be notified when instructions are performed on an individual basis or after all instructions, or a particular part of the instructions, have been completed in step 1236. Settlement data may be received (e.g., by the ecosystem provider from a payments processor) in step 1237. The results of the settlement may be discerned and actions based on these results may be performed in step 1238. Process 1240 may be provided and may included step 1241, in which settlement data is provided to a third party. Receipt of the settlement data may be confirmed in step 1242. If no receipt, or no confirmation of receipt after a particular amount of time, the data is resent until a confirmation is received. In step 1244, actions and management functions are performed based on the results of the settlement and instructions are provided, if desired, to third parties in step 1245. Third party confirmation is determined in step 1246 that the party has conformed to instructions. The conformance grading for third parties is adjusted based on the conformance in step 1247. The transfer of funds to the developer may be suspended and/or a fine may be issued to the developer (e.g., third party service provided) if the non-conformance threshold is met.

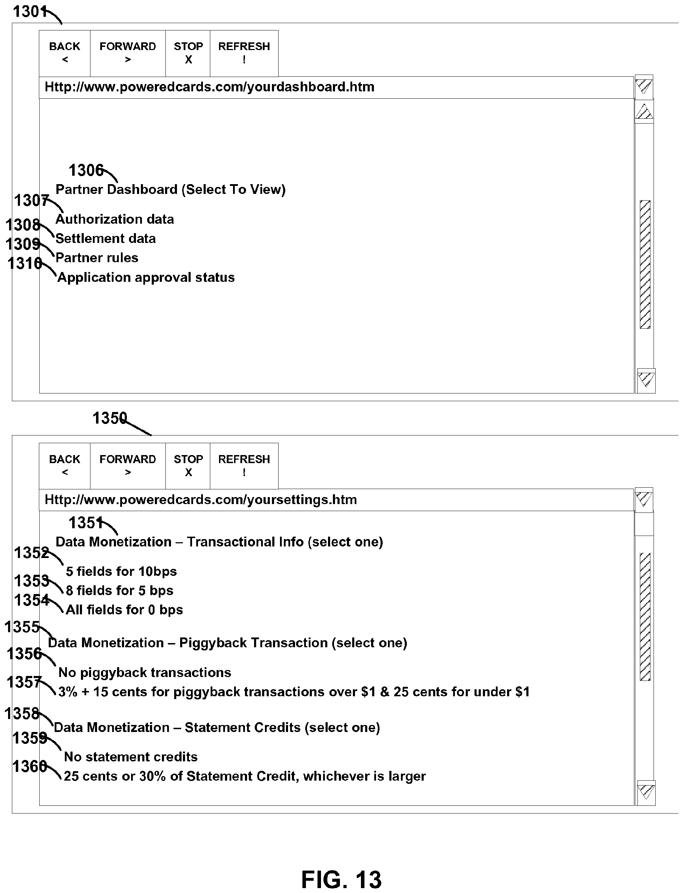

FIG. 13 shows GUI 1301 which may include dashboard 1306 with third party service provider options 1307-1310. Option 1307 may be utilized such that a partner, such as a developer (e.g., a third party service provider) may view and download authorization data for purchases made with the application. Option 1308 may be allow a partner to view and download settlement data. Option 1309 may allow a partner to view and download partner rules. Option 1310 may be provided to allow a partner to view and download the approval status for an application feature. GUI 1350 may also be provided with pricing information 1351-1360. Pricing information 1151 may include a data monetization process in which a particular number of fields (e.g., 5) are provided for a first basis point (10bps) of net purchase volume of underlying transactions in information 1352. Information 1352 may include a particular number of fields (8) for a second basis points of net purchase volume of underlying transactions (e.g., 5). Information 1354 may include a particular number of fields (e.g., all fields) for a particular amount of basis points in revenue of underlying, eligible transactions (e.g., 0). Information 1355 may be included for piggyback transaction information. Information 1356 may be provided for no piggyback transactions no cost structure. Information 1357 may be provided for a cost structure for piggyback transactions of different sizes. Information 1358 may be utilized for statement credits. Information 1359 may be provided for no cost structure for no statement credits and information 1360 may be provided for a cost structure for a particular type of statement credits. Persons skilled in the art will appreciate that a partner may select the various option associated with the information for each monetization structure and activate features associated with the selected options for an application feature.

Persons skilled in the art will also appreciate that the present invention is not limited to only the embodiments described. Instead, the present invention more generally involves dynamic information. Persons skilled in the art will also appreciate that the apparatus of the present invention may be implemented in other ways then those described herein. All such modifications are within the scope of the present invention, which is limited only by the claims that follow.

### Additional Statements

There is provided a method comprising: receiving manual input indicative of changing a feature associated with a payment device; changing, on a remote server, said feature associated with said payment device; receiving first information indicative of payment from said payment device; authorizing payment for said payment device; retrieving said feature from said remote server; and initiating a credit transaction based, at least in part, on said received feature and said authorized payment.

Preferably, wherein said payment device is a battery-powered card.

Preferably, wherein said payment device is a phone.

Preferably, wherein said payment device is a battery-powered card with a dynamic magnetic stripe communications device.

There is provided a method comprising: receiving manual input indicative of changing a feature associated with a payment device; changing, on a remote server, said feature associated with said payment device; receiving first information indicative of payment from said payment device; authorizing payment for said payment device; retrieving said feature from said remote server; and initiating a piggyback purchase transaction based, at least in part, on said received feature and said authorized payment.

Preferably, wherein said payment device is a battery-powered card.

Preferably, wherein said payment device is a phone.

Preferably, wherein said payment device is a battery-powered card with a dynamic magnetic stripe communications device.

There is provided a system comprising: payment device means having a first button means associated with a first payment feature and a second button means associated with a second payment feature; and device means having display means, wherein a graphical user interface is provided on said display means that includes a plurality of application features, wherein a first one of said plurality of application features is associated to said first button means and a second one of said plurality of application features is associated to said second button means, wherein said first one of said plurality of application features initiates a secondary purchase when a primary purchase is made with said payment device means and said first button means is activated.

Preferably, wherein a purchase transaction is initiated with said payment device as a result of said first button means being activated and said first one of said plurality of application features is provided.

Preferably, wherein a purchase transaction is initiated with said payment device as a result of said second button means being activated, said second one of said plurality of application features is provided, and said second one of said plurality of application features initiates a statement credit.

Preferably, wherein a purchase transaction is initiated with said payment device as a result of said second button means being activated, said second one of said plurality of application features is provided, and said second one of said plurality of application features initiates a secondary purchase and a statement credit.

Preferably, wherein a purchase transaction is initiated with said payment device as a result of said second button means being activated, said second one of said plurality of application features is provided, and said second one of said plurality of application features initiates a secondary purchase.

Preferably, wherein the association of said first one of said plurality of application features to said first button means is changed via said graphical user interface to a third one of said plurality of application features.

Preferably, wherein said graphical user interface displays a virtual representation of said payment device means.

Preferably, wherein said payment device means includes light sensing means for receiving information.

Preferably, wherein said payment device means includes light sensing means for receiving information from said device means.

Preferably, wherein said payment device means is a battery-powered payment card.

Preferably, wherein said payment device means is a phone.

Preferably, wherein said device means is a computer.

## Claims

1. A system comprising:
payment device means (100) having a first button means (198) associated with a first payment feature and a second button means (199) associated with a second payment feature; and
device means (600) having display means (610), wherein a graphical user interface (601) is provided on said display means (610) that includes a plurality of application features (621-624), wherein a first one (622) of said plurality of application features (621-624) is associated to said first button means (198) and a second one (624) of said plurality of application features (621-624) is associated to said second button means (199), wherein said first one (622) of said plurality of application features (621-624) initiates a secondary purchase when a primary purchase is made with said payment device means (600) and said first button means (198) is activated.

2. The system of claim 1, wherein a purchase transaction is initiated with said payment device (100) as a result of said first button means (198) being activated and said first one (622) of said plurality of application features (621-624) is provided.

3. The system of either of claims 1 or 2, wherein a purchase transaction is initiated with said payment device (100) as a result of said second button means (199) being activated, said second one (624) of said plurality of application features (621-624) is provided, and said second one (624) of said plurality of application features (621-624) initiates a statement credit.

4. The system of either of claims 1 or 2, wherein a purchase transaction is initiated with said payment device (100) as a result of said second button means (199) being activated, said second one (624) of said plurality of application features (621-624) is provided, and said second one (624) of said plurality of application features (621-624) initiates a secondary purchase and a statement credit.

5. The system of either of claims 1 or 2, wherein a purchase transaction is initiated with said payment device (100) as a result of said second button means (199) being activated, said second one (624) of said plurality of application features (621-624) is provided, and said second one (624) of said plurality of application features initiates a secondary purchase.

6. The system of any of any preceding claim, wherein the association of said first one (622) of said plurality of application features (621-624) to said first button means (198) is changed via said graphical user interface (601) to a third one of said plurality of application features (621-624) .

7. The system of any of any preceding claim, wherein said graphical user interface (601) displays a virtual representation of said payment device means (100).

8. The system of any of any preceding claim, wherein said payment device means (100) includes light sensing means (127) for receiving information.

9. The system of any of claims 1 to 7, wherein said payment device means (100) includes light sensing means (127) for receiving information from said device means (600).

10. The system of any of any preceding claim, wherein said payment device means (100) is one of: a battery-powered payment card; and a phone.

11. The system of any of any preceding claim, wherein said device means is a computer.
